# EUROPÄISCHE PATENTSCHRIFT

(11) **EP 0 581 159 B1**
(45) Veröffentlichungstag und Bekanntmachung des Hinweises auf die Patenterteilung: **28.05.1997**
(21) Anmeldenummer: 93111542.2
(22) Anmeldetag: 19.07.1993
(51) Int. Cl.: C08G 18/08, C14C 11/00

(54) **Anionisch modifizierte Polyurethanharnstoffe mit verringerter Klebrigkeit für die Lederbeschichtung**
Anionically modified polyureas having reduced tack for leather coating
Polyurées modifiés par des groupes anioniques à adhésivité réduite pour le revêtement du cuir

(30) Priorität: 31.07.1992 DE 4225290
(43) Veröffentlichungstag der Anmeldung: 02.02.1994
(73) Patentinhaber: BAYER AG, 51368 Leverkusen (DE)
(72) Erfinder: Münzmay, Thomas, Dr., D-41539 Dormagen (DE); Hassel, Tillmann, Dr., D-51061 Köln (DE)

(56) Entgegenhaltungen:
- EP-A- 0 300 335
- EP-A- 0 441 196
- WO-A-81/02894
- DE-A- 2 536 971
- FR-A- 1 560 629

## Beschreibung

Die Erfindung betrifft anionisch modifizierte Polyurethanharnstoffe mit niedrigen Urethan- und Harnstoffgruppengehalten und ihre Verwendung zur Beschichtung von Leder.

Für die praktische Verwendung von zugerichtetem Leder ist von großer Bedeutung, daß die aufgebrachten Zurichtschichten auf dem Substrat gut haften, da andernfalls die geforderten physikalischen Echtheiten nicht zu erreichen sind. Problematisch ist das Einstellen des geforderten Haftungsniveaus besonders bei stark gefetteten und/oder phobierten Substraten, da die Fettungs- und Phobierungsmittel in der Regel als Trennmittel für die Zurichtschichten wirken. Deshalb ist insbesondere bei der Zurichtung derartiger Leder die Verwendung eines speziellen Haftgrundes entweder als separater Auftrag oder in Abmischung mit anderen Grundierungsbindern üblich. Als Haftgründe haben sich wäßrige Dispersionen von Polyetherurethanen bewährt (DE-OS 2 551 094 und 2 730 514, EP-A 255 013 und 441 196).

Polyetherurethane des Standes der Technik besitzen besonders in weichen Einstellungen eine gewisse Klebrigkeit. Diese Klebrigkeit ist einerseits erwünscht, weil sie die Haftung verbessert, andererseits ist sie verarbeitungstechnisch ein Nachteil, weil sie die Stapelfähigkeit der grundierten Leder beeinträchtigt. Für eine Verwendung als Haftgrund sind jedoch weiche Einstellungen zwingend erforderlich, da harte Produkte in der Grundierung physikalische Echtheiten, Aspekt und Komfort der zugerichteten Leder negativ beeinflussen. Die Verwendung externer Weichmacher (EP-A 255 013 = DE-OS 3 625 442) ist unerwünscht, da Migrationseffekte nicht auszuschließen sind.

In der DE-OS 4 003 442 (= EP-A 441 196) werden Polyetherurethanharnstoffe beschrieben, bei denen die gewünschte Weichheit dadurch erreicht wird, daß bei der Herstellung mit einem NCO/(OH+NH)-Molverhältnis von 0,9 bis 1 gearbeitet wird. Die Molmasse, die Härte, aber auch die Festigkeit dieser Produkte sind begrenzt. Die Einstellung einer geringeren Härte nach einer derartigen Methode führt zu einer geringeren Festigkeit und einer höheren Klebrigkeit der Polymeren. Höchste Echheiten werden aber nur mit Polymeren mit möglichst hoher Festigkeit erhalten (Das Leder 25 (1974), 185-190).

Aus der US-PS 4 895 894 sind aliphatische Polyetherurethanharnstoffe mit niedrigen Urethan- und Harnstoffgruppengehalten bekannt. Die Produkte sind verzweigt bzw. vernetzt und besitzen hohe Moduli, aber zu hohe Shore A-Härten (in den Beispielen mindestens Shore A = 58). Vernetzte Polyurethane sind nicht in die organische Phase überführbar, und deshalb ist mit ihnen die bei der Ledergrundierung übliche Regulierung der Eindringtiefe durch Zusatz organischer Cosolventien nicht möglich.

Wünschenswert für den angestrebten Verwendungszweck sind Polyurethanharnstoffe mit verhältnismäßig hoher Festigkeit bei geringer Härte und möglichst geringer Klebrigkeit, die eine sehr gute Haftung auch auf gefetteten und/oder phobierten Ledern vermitteln.

Wünschenswert für den angestrebten Verwendungszweck sind Polyurethanharnstoffe, die bei guter Haftung weich und klebfrei sind, aber dennoch eine hohe Festigkeit aufweisen.

Es wurde nun gefunden, daß die gestellte Aufgabe durch Polyurethanharnstoffe aus aromatischen Diisocyanaten mit einem niedrigen Gehalt an Urethan- und Harnstoffgruppen gelöst wird.

Für den Fachmann war zu erwarten, daß bei niedrigem Urethan- und/oder Harnstoffgruppengehalt zwar weiche Produkte resultieren, daß dabei aber die Klebrigkeit zu-und die Festigkeit abnimmt. Dies gilt besonders bei der Verwendung aromatischer Diisocyanate.

Gegenstand der vorliegenden Erfindung sind also anionisch modifizierte Polyurethanharnstoffe aus
A. aromatischem Diisocyanat,
B. Polyetherpolyol mit einem mittleren Molekulargewicht größer als 1500, bevorzugt von 1800 bis 3000,
C. wenigstens einer 1 bis 2 isocyanatreaktive Gruppen sowie wenigstens eine ionogene Gruppe aufweisenden Verbindung,
D. Polyamin mit einem mittleren Molekulargewicht von mindestens 32, bevorzugt 60 bis 500, sowie
E. Wasser,
wobei die mittlere Gesamtfunktionalität der isocyanat-reaktiven Verbindungen B bis D 1,85 bis 2,2, vorzugsweise 1,9 bis 2,1,beträgt,
dadurch gekennzeichnet, daß das Molverhältnis der Isocyanatgruppen der Komponente A zu den isocyanatreaktiven Gruppen der Komponenten B bis D größer als 1, vorzugsweise größer als 1,05 ist und die Polyurethanharnstoffe einen Gehalt von 800 bis 1500, bevorzugt weniger als 1400 mmol Urethangruppen/kg anionisch modifiziertem Polyurethanharnstoff und einen Gehalt von 800 bis 1800, bevorzugt 1000 bis 1700 mmol Urethan- plus Harnstoffgruppen/kg anionisch modifiziertem Polyurethanharnstoff besitzen.

Nach einer weiteren bevorzugten Ausführungsform besitzen die erfindungsgemaßen Polyurethanharnstoffe eine Shore A-Härte von maximal 50.

Gegenstand der Erfindung ist weiterhin die Verwendung dieser anionisch modifizierten Polyurethanharnstoffe zur Beschichtung von Leder.

Der Unterschied des bevorzugten Gegenstandes unserer Erfindung zum Gegenstand der EP-A 441 196 sei nachfolgend etwas genauer erklärt: Das Verhältnis NCO-Gruppen zu NCO-reaktiven alkoholischen und aminischen Gruppen beträgt in den Beispielen der EP-A 441 106 1,0.

Da die Zugabe des zur Dispergierung notwendigen Wassers vor Erreichen des vollstandigen Umsatzes aller alkoholischen Hydroxylgruppen mit Isocyanat erfolgen muß, nimmt auch das Wasser als isocyanatreaktive Komponente an der Reaktion teil. Das tatsächliche Verhältnis Isocyanatgruppen zu isocyanat-reaktiven Gruppen ist also immer kleiner als 1. Es bleiben unreagierte alkoholische Hydroxyl gruppen übrig. Das heißt mit anderen Worten: Jedes Molekül Wasser, das an der Reaktion teilnimmt, führt indirekt zu einem Kettenabbruch. Man erhält ein relativ niedermolekulares Produkt mit endständigen Hydroxylgruppen.

Anders im vorliegenden Fall: Das Verhältnis NCO-Gruppen zu NCO-reaktiven alkoholischen und aminischen Gruppen ist größer als 1. Da Wasser zu einem Zeitpunkt zugegeben wird, da alle vorhandenen alkoholischen Hydroxylgruppen bereits mit Isocyanat reagiert haben, tritt das Wasser nicht als Konkurrent auf. Die gegebenenfalls gleichzeitig mit Wasser zugegebenen Polyamine reagieren so schnell mit Isocyanat ab, daß das Wasser auch für diese Reaktion keinen Konkurrenten darstellt. Das Wasser kann also nur mit überschüssigen Isocyanatgruppen reagieren und trägt damit essentiell zum Molekulargewichtsaufbau bei.

Die erfindungsgemäßen Produkte besitzen eine große Weichheit und eine sehr geringe Klebrigkeit und insbesondere eine außerordentlich glückliche Kombination von sehr guter Naßhaftung, großer Weichheit und geringer Klebrigkeit.

Als Diisocyanatkomponente A seien beispielhaft genannt: Aromatische Diisocyanate, wie sie z.B. von W. Siefken in Justus Liebigs Annalen der Chemie 562, S. 75-136 beschrieben werden.

Besonders bevorzugt sind aromatische Diisocyanate oder Diisocyanatgemische mit seitenständigen Alkylgruppen, wie z.B. 2,4- und 2,6-Toluylendiisocyanat.

Als Polyetherpolyole B werden bevorzugt die Polyadditionsprodukte des Ethylenoxids, Propylenoxids, Butylenoxids sowie deren Misch- und Pfropfpolyadditionsprodukte sowie die durch Kondensation von mehrwertigen Alkoholen oder deren Mischungen und die durch Alkoxylierung von Wasser, mehrwertigen Alkoholen, Aminen oder Aminoalkoholen gewonnenen Polyether eingesetzt; besonders bevorzugt sind Homo- und/oder Mischpolyadditionsverbindungen von Ethylenoxid und/oder Propylenoxid des Molekulargewichts größer als 1500, bevorzugt zwischen 1800 und 3000 mit einer mittleren Funktionalität größer als 1,85, bevorzugt von 2 bis 3; besonders bevorzugt sind difunktionelle Polyether.

In untergeordneter Menge können gegebenenfalls weitere höhermolekulare Polyhydroxylkomponenten, die aus der Polyurethanchemie an sich bekannt sind, z.B. aus den Klassen der Polyester-, Polylacton- oder Polycarbonatpolyole Verwendung finden.

Als ionogene Verbindungen C, die 1 bis 2 isocyanatreaktive Gruppen sowie wenigstens eine ionogene Gruppe aufweisen, kommen Verbindungen wie z.B. Hydroxy- und Mercaptocarbonsäuren, Aminocarbonsäuren wie Glycin, Alanin oder 4-Aminobuttersäure, Di- und Polyhydroxycarbonsäuren wie Dimethylolpropionsäure oder Dimethylolbuttersäure oder Sulfonatgruppen aufweisende aliphatische Diole gemäß DE-OS 2 446 440 und 2 437 218 in Frage. Zu den besonders bevorzugten ionogenen Komponenten C gehören Sulfonatdiole der Formel 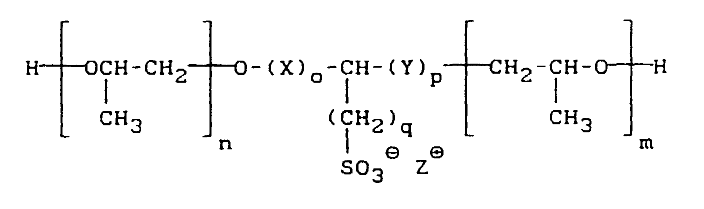 wobei
- X und Y: für gleiche oder verschiedene zweiwertige aliphatische Kohlenwasserstoffreste mit 1 bis 6 Kohlenstoffatomen stehen,
- Z: für ein Alkalimetallion oder ein Proton steht,
- n und m: gleich oder verschieden sind und für Null oder Zahlen von 1 bis 30 stehen,
- o und p: für 0, 1, 2 oder 3 stehen und
- q: für 0, 1 oder 2 steht.

Ebenfalls besonders bevorzugt ist Dimethylolpropionsäure.

Weiterhin besonders bevorzugte Komponenten C sind Diaminosulfonate der in CA-PS 928 323 beschriebenen Art, wie das Natriumsalz der N-(2-Aminoethyl)-2-aminoethansulfonsäure oder das Natriumsalz der N-(2-Aminoethyl)-2-aminopropansäure.

Sofern ionogene Komponenten C in Form von nicht neutralisierten Carbon- und/oder Sulfonsäuren eingesetzt werden, kommen als Neutralisationsmittel vorzugsweise tertiäre Amine wie Triethylamin, Tripropylamin, Tributylamin, Triisopropanolamin, N,N-Dimethylethanolamin oder Ammoniak oder Alkalihydroxide wie Natrium- oder Kaliumhydroxid oder Alkalicarbonate oder -hydrogencarbonate in Frage.

Als Polyamine D einsetzbar sind Verbindungen, deren Molekulargewicht größer als 32 ist, bevorzugt zwischen 60 und 500 liegt, und die primäre und/oder sekundäre Aminogruppen enthalten.

Beispielsweise sind dies Ethylendiamin, Hexamethylendiamin, Isophorondiamin, 2,4-Diaminotoluol, 4,4'-Diaminodiphenylmethan, N,N'-Dimethylethylendiamin, 4,4'-Diaminocyclohexylmethan, Piperazin, 2,5-Dimethylpiperazin, 1,4-Diaminocyclohexan, 1,2-Diamino-propan, Hydrazin(hydrat), Diethylentriamin.

Gegebenenfalls können zur Modifizierung der Funktionalität Monoamine, wie z.B. Dibutylamin, Ethanolamin, N-Methylethanolamin, Diethanolamin oder Propanolamin in untergeordneter Menge mitverwendet werden.

Die Polyamine D können natürlich auch in blockierter Form, d.h. in Form der entsprechenden Ketimine (DE-OS 2 725 589), Ketazine (DE-OS 2 811 148, US-PS 4 269 748) oder Aminsalze (US-PS 4 292 226) zum Einsatz gelangen.

Besonders geeignet sind die erfindungsgemäßen Polyurethanharnstoffe dann, wenn sie einen Gehalt an Urethanplus Harnstoffgruppen von 1000 bis 1700 mmol/kg besitzen.

Im allgemeinen erfolgt die Herstellung der Polyurethanharnstoffe nach einem der folgenden an sich bekannten Verfahren:
1. Das sogenannte "Acetonverfahren" gemäß der Lehre des DE-OS 1 495 745, US-P 3 479 310, wonach ein NCO-endständiges Präpolymer in der Schmelze hergestellt, in einem geeigneten Lösungsmittel gelöst und in Lösung mit einem Kettenverlängerungsmittel zu einem Polyurethan umgesetzt wird. Nachdem die Lösung des Polyurethans mit Wasser vermischt worden ist, wird die Polyurethan-Dispersion durch Abdestillieren des Lösungsmittels erhalten. Mit diesem Verfahren lassen sich im wesentlichen lineare Polyurethane aufbauen, da vernetzte Systeme leicht in der organischen Phase gelieren.
2. Ein Verfahren zur Herstellung von Dispersionen auf Polyurethanbasis unter Verwendung blockierter Amine oder Hydrazine als Kettenverlängerungsmittel wird in der DE-OS 2 725 589, US-P 4 269 748, US-P 4 192 937 oder US-P 4 292 226 beschrieben. Hierbei wird ein hydrophiles, endständiges NCO-Gruppen aufweisendes Präpolymer mit zumindest teilweise blockierten Aminen oder Hydrazinen in Abwesenheit von Wasser gemischt und dieses Gemisch anschließend mit Wasser versetzt, wodurch das vorher blockierte Amin oder Hydrazin freigesetzt wird und als Kettenverlängerer des Präpolymeren reagiert. Nach diesem Verfahren können zwar zur Bildung der NCO-endständigen Präpolymere auch aromatische Diisocyanate eingesetzt werden, jedoch sind Präpolymere mit aliphatisch und/oder cycloaliphatisch gebundenen NCO-Gruppen bevorzugt.
3. Es ist auch eine Verfahrensweise unter Kettenverlängerung der NCO-endständigen Präpolymere im wäßrigen Medium durch Dispergieren der hydrophilen Präpolymere in Wasser und anschließender Zugabe des Kettenverlängerers bekannt. Zur Dispersionsbildung kann sowohl das Wasser zum Präpolymeren als auch das Präpolymer zum Wasser gegeben werden. Bei der Kettenverlängerung in wäßrigem Medium sind Präpolymere mit aliphatischen und/oder cycloaliphatischen endständigen NCO-Gruppen besonders bevorzugt. Bei Verwendung von aromatisch gebundenen NCO-Endgruppen ist eine Verkappung dieser Isocyanatgruppen vor der Zugabe von Wasser bevorzugt, wie sie in der US-PS 43 87 181 beschrieben wird.

Das Acetonverfahren 1) zur Herstellung der Dispersionen wird bevorzugt.

Erfindungsgemäß kann die Dispergierung der Polyurethane grundsätzlich nach beliebigen Verfahren erfolgen. Hierzu zählt beispielsweise die Dispergierung ohne Verwendung von Lösungsmitteln, z,B, durch Vermischung der Polyurethanschmelzen mit Wasser in Geräten, die hohe Schergefälle erzeugen können, sowie die Verwendung von geringen Mengen Lösungsmittel zur Plastizifierung bei der Verarbeitung in den genannten Geräten sowie auch den Einsatz nicht-mechanischer Dispergiermittel, wie Schallwellen extrem hoher Frequenz. Es können jedoch auch einfache Mischer, z.B. Rührkessel oder sogenannte Rücklaufmischer Verwendung finden, wenn die Polyurethane selbst dispergierbar sind.

Im allgemeinen werden die Mengen an Ausgangskomponenten A bis E so bemessen, daß anionisch modifizierte Polyurethanharnstoffe mit 5 bis 35, bevorzugt 10 bis 30 mmol anionischer Gruppen/100 g Polyurethanharnstoff und Dispersionen mit einem Feststoffgehalt von 20 bis 60 Gew.-% erhalten werden.

Die Funktionalitäten der Komponenten B bis D werden so gewählt, daß sich die anspruchsgemäße mittlere Gesamtfunktionalität ergibt.

Beim Einsatz erfindungsgemäßer Polyurethanharnstoffe aus organischer Phase kommen zum Umlösen z.B. Dimethylformamid, Dimethylacetamid, Tetrahydrofuran oder N-Methylpyrrolidon oder Lösungsmittelgemische aus Ketonen, wie z.B. Cyclohexanon, Methylethylketon, Methylisobutylketon oder Aceton, und Alkoholen, wie z.B. i-Propanol, n-Butanol, t-Butanol, Methoxypropanol oder Butylglykol in Frage.

Die Prozentangaben der nachfolgenden Beispiele beziehen sich jeweils auf das Gewicht; Teile sind Gewichtsteile.

### Beispiele

### Bestimmung der Löslichkeit und Viskosität in THF

10 Teile wäßriger Dispersion mit 30 % Feststoffgehalt werden mit 90 Teilen Tetrahydrofuran verdünnt (25°C/60 Min. rühren).

Beurteilung: Vollständige Löslichkeit liegt dann vor, wenn eine klare, fließfähige Lösung ohne mit dem unbewaffneten Auge erkennbare Gelanteile erhalten wird.

Viskosität: Die angegebenen Viskositäten verstehen sich als Auslaufviskositäten, gemessen gemäß DIN 53 211 im DIN-Becher (4 mm Düse). Angegeben wird die Auslaufzeit bis zum Abriß des Flüssigkeitsfadens in Sekunden [s].

### Härtemessung: Shore A-Härte in Anlehnung an DIN 53 505

10 ml einer 30 %igen wäßrigen Polyurethanharnstoff-Dispersion werden auf Glas gegossen, über Nacht bei Raumtemperatur trocknen gelassen und 1/2 h bei 50° C nachgetrocknet. Der Film wird abgezogen und in Streifen geschnitten. Die Streifen werden so aufeinandergelegt, daß keine Luft eingeschlossen wird und der Stapel mindestens 6 mm hoch ist. Mit diesem Stapel wird dann die Messung durchgeführt. Angegeben wird das Mittel aus 3 Messungen.

### Beispiel 1

400 g eines Polypropylenoxiddiols (OHZ = 56) und 18,8 g Dimethylolpropionsäure werden 60 min bei 110°C und 15 mbar entwässert. Bei 95°C werden 73,9 g eines 35:65-Gemisches aus 2,6- und 2,4-Toluylendiisocyanat zugegeben. Nach 5 h ist ein Isocyanatgehalt von 1,34 % erreicht. Es wird mit 390 g Aceton verdünnt und mit 10,6 g Triethylamin 15 min bei 50°C versalzt. Die Lösung wird mit 1000 g Wasser verdünnt und mit 2,7 g Diethylentriamin in 100 g Wasser kettenverlängert. Nach destillativer Entfernung des Acetons erhält man eine feinteilige Dispersion mit folgenden Daten:

| 30,6 Gew.-% Festkörpergehalt pH = 8,0 | |
|---|---|
| Urethangruppen: | 1344 mmol/kg |
| Harnstoffgruppen: | 255 mmol/kg |
| Summe: | 1599 mmol/kg |
| Shore A: | 47 |
| Löslichkeit in THF: | vollständig löslich (klare Lösung) |
| Viskosität in THF: | 26 s |

### Beispiel 2

Durchführung wie Beispiel 1, aber statt 2,7 g Diethylentriamin werden 12,1 g Isophorondiamin verwendet:

| 30,7 Gew.-% Feststoff pH = 8,2 | |
|---|---|
| Urethangruppen: | 1319 mmol/kg |
| Harnstoffgruppen: | 303 mmol/kg |
| Summe: | 1622 mmol/kg |
| Shore A: | 44 |
| Löslichkeit in THF: | vollständig löslich (klare Lösung) |
| Viskosität in THF: | 13 s |

### Beispiel 3

1380 g eines Polypropylenoxiddiols (OH-Z = 56) und 65 g Dimethylolpropionsäure werden 60 min. bei 110°C und 15 mbar entwässert. Bei 90°C werden 266 g eines 35:65-Gemisches aus 2,6- und 2,4-Toluylendiisocyanat zugegeben. Nach 5 h ist ein Isocyanatgehalt von 1,55 % erreicht. Es wird mit 3300 g Aceton verdünnt. Zu der acetonischen Lösung gibt man bei 55 bis 65°C 12,25 g Ethylendiamin in 160 g Wasser zu. Anschließend wird mit 35 g Triethylamin neutralisiert und mit 4000 g Wasser versetzt. Nach destillativer Entfernung des Acetons erhält man eine feinteilige Dispersion mit folgenden Daten:

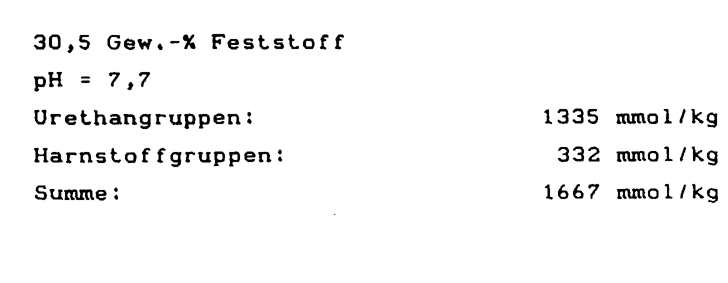

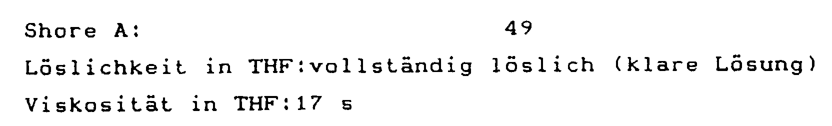

### Beispiele 4 und 5

### Herstellung der Prüflinge

Aus einem mit einem handelsüblichen Fluorcarbonharz phobierten Vollnarbenleder wurden Muster mit den Abmessungen 11 x 20 cm geschnitten. Aus den in Beispielen 2 und 3 genannten Produkten wurden wäßrige Zubereitungen mit einem Feststoffgehalt von 6 % und einen Gehalt von 10 % Isopropanol hergestellt.

5 g dieser Zubereitungen wurden jeweils auf die Narbenseite der Ledermuster aufgespritzt.

Nach Trocknung (10 min/50°C) und Lagerung über Nacht bei Raumtemperatur wurden die so grundierten Leder 2 mal mit je 5 g einer Mischung aus 75 Teilen ®EUDERM Grundschwarz C, 75 Teilen ®EUDERM Filler VF, 50 Teilen ®EUDERM Paste FO, 150 Teilen ®EUDERM Dispersion 32 A, 150 Teilen ®BAYDERM Grund 50 UD und 500 Teilen Wasser überspritzt. Die getrockneten Muster wurden gemäß JUF 470 auf Trocken- und Naßhaftung geprüft (DESMOCOLL-Methode, Werte in N cm⁻¹).

| Beispiel | PUR aus | Haftung [N/cm] | |
|---|---|---|---|
| | | trocken | naß |
| 4 | Beispiel 2 | 6,0/6,2 * | 2,8/2,8 |
| 5 | Beispiel 3 | 7,5/7,0 * | 3,0/3,5 |

| | | | |
|---|---|---|---|
| * Narbenanriß | | | |

### Beispiel 6 (Vergleich gegen US 4 895 894)

Eine Mischung aus 200 g eines Polypropylenoxiddiols (OH-Z = 56) und 13,6 g Dimethylolpropionsäure wird 60 min bei 110°C und 15 mbar entwässert. Bei 100°C werden 80 g 4,4'-Methylen-bis-(cyclohexyl-isocyanat) zugegeben. Nach 4 h ist ein Isocyanatgehalt von 2,72 % erreicht. Die Schmelze wird mit 9,8 g Triethylamin 15 min bei 70°C gerührt. Anschließend wird mit 700 g Wasser verdünnt. Zu der Lösung werden 5,41 g Ethylendiamin in 100 g Wasser zugegeben. Man erhält eine feinteilige Dispersion, die sich nach ca. 3 Stunden quarkartig verfestigt.

| | |
|---|---|
| Urethangruppen: | 1308 mmol/kg |
| Harnstoffgruppen: | 625 mmol/kg |
| Summe: | 1933 mmol/kg |
| Löslichkeit in THF: | unlöslich |

## Patentansprüche

1. Anionisch modifizierte Polyurethanharnstoffe aus
A. aromatischem Diisocyanat,
B. Polyetherpolyol mit einem mittleren Molekulargewicht größer als 1500,
C. wenigstens einer 1 bis 2 isocyanatreaktive Gruppen sowie wenigstens eine ionogene Gruppe aufweisenden Verbindung,
D. Polyamin mit einem mittleren Molekulargewicht von mindestens 32 sowie
E. Wasser,
wobei die mittlere Gesamtfunktionalität der isocyanatreaktiven Verbindungen B bis D 1,85 bis 2,2 beträgt,
dadurch gekennzeichnet, daß das Molverhältnis der Isocyanatgruppen der Komponente A zu den isocyanatreaktiven Gruppen der Komponenten B bis D größer als 1 ist und die Polyurethanharnstoffe einen Gehalt von 800 bis 1500 mmol Urethangruppen/kg anionisch modifiziertem Polyurethanharnstoff und einen Gehalt von 800 bis 1800 mmol Urethan- plus Harnstoffgruppen/kg anionisch modifiziertem Polyurethanharnstoff besitzen.

2. Polyurethanharnstoffe nach Anspruch 1, die 1000 bis 1700 mmol Urethan- plus Harnstoffgruppen/kg anionisch modifiziertem Polyurethanharnstoff besitzen.

3. Polyurethanharnstoffe nach Ansprüchen 1 und 2, die mehr als 150 mmol Harnstoffgruppen/kg anionisch modifiziertem Polyurethanharnstoff besitzen.

4. Polyurethanharnstoff nach Ansprüchen 1 und 2, die mehr als 200 mmol Harnstoffgruppen/kg anionisch modifiziertem Polyurethanharnstoff besitzen.

5. Polyurethanharnstoffe nach Anspruch 1, wonach das Molverhältnis der Isocyanatgruppen der Komponente A zu den isocyanatreaktiven Gruppen der Komponenten B bis D größer als 1.05 ist.

6. Polyurethanharnstoffe nach Ansprüchen 1-5 mit einer Shore A-Härte von maximal 50.

7. Verwendung der Polyurethanharnstoffe nach Ansprüchen 1 bis 6 zur Beschichtung von Leder.

## Claims

1. Anionically modified polyurethane-ureas composed of
A. an aromatic diisocyanate,
B. a polyether-polyol with an average molecular weight greater than 1500,
C. at least one compound containing 1 to 2 isocyanate-reactive groups and at least one ionic group,
D. a polyamine with an average molecular weight of at least 32, and
E. water,
the average total functionality of the isocyanate-reactive compounds B to D being 1.85 to 2.2,
characterized in that the molar ratio of the isocyanate groups in component A to the isocyanate-reactive groups in components B to D is greater than 1 and the polyurethane-ureas contain 800 to 1500 mmol of urethane groups/kg of anionically modified polyurethane-urea and 800 to 1800 mmol of urethane plus urea groups/kg of anionically modified polyurethane-urea.

2. Polyurethane-ureas according to Claim 1 which have 1000 to 1700 mmol of urethane plus urea groups/kg of anionically modified polyurethane-urea.

3. Polyurethane-ureas according to Claims 1 and 2 which have more than 150 mmol of urea groups/kg of anionically modified polyurethane-urea.

4. Polyurethane-ureas according to Claims 1 and 2 which have more than 200 mmol of urea groups/kg of anionically modified polyurethane-urea.

5. Polyurethane-ureas according to Claim 1 in which the molar ratio of the isocyanate groups in component A to the isocyanate-reactive groups in components B to D is greater than 1.05.

6. Polyurethane-ureas according to Claims 1-5 with a maximum Shore A hardness of 50.

7. Use of the polyurethane-ureas according to Claims 1 to 6 for coating leather.

## Revendications

1. Polyuréthane-urées modifiées par voie anionique issues
A. de diisocyanate aromatique,
B. de polyétherpolyol d'une masse moléculaire moyenne supérieure à 1 500,
C. d'au moins un composé comportant un à deux groupes réactifs vis-à-vis des isocyanates et au moins un groupe ionogène,
D. de polyamine d'une masse moléculaire moyenne d'au moins 32 et
E. d'eau,
la fonctionnalité totale moyenne des composés réactifs vis-à-vis des isocyanates B à D étant de 1,85 à 2,2,
caractérisées en ce que le rapport molaire des groupes isocyanate du constituant A aux groupes réactifs vis-à-vis des isocyanates des constituants B à D est supérieur à et en ce que les polyuréthane-urées possèdent une teneur en groupes uréthane/kg de polyuréthane-urée modifiée par voie anionique de 800 à 1500 mmol et une teneur en groupes uréthane plus urée/kg de polyuréthane-urée modifiée par voie anionique de 800 à 800 mmol.

2. Polyuréthane-urées selon la revendication 1 qui possèdent 1000 à 1700 mmol de groupes uréthane plus urée/kg de polyuréthane-urée modifiée par voie anionique.

3. Polyuréthane-urées selon les revendications 1 et 2 qui possèdent plus de 150 mmol de groupes urée/kg de polyuréthane-urée modifiée par voie anionique.

4. Polyuréthane-urées selon les revendications 1 et 2 qui possèdent plus de 200 mmol de groupes urée/kg de polyuréthane-urée modifiée par voie anionique.

5. Polyuréthane-urées selon la revendication 1, dans lesquelles le rapport molaire des groupes isocyanate du constituant A aux groupes réactifs vis-à-vis des isocyanates des constituants B à D est supérieur à 1,05.

6. Polyuréthane-urées selon les revendications 1-5 ayant une dureté Shore A de 50 au maximum.

7. Utilisation des polyuréthane-urées selon les revendications 1 à 6 pour le revêtement du cuir.
